(19) **Europäisches Patentamt / European Patent Office / Office européen des brevets**

(11) **EP 3 534 185 B1**

(12) **EUROPEAN PATENT SPECIFICATION**

(45) Date of publication and mention
of the grant of the patent:
**29.12.2021  Bulletin 2021/52**

(51) Int Cl.:
*G01V 3/10* *(2006.01)*  *G01V 3/15* *(2006.01)*

(21) Application number: **18382123.0**

(22) Date of filing: **28.02.2018**

(54) **LOCATOR EQUIPMENT**

LOKALISIERAUSRÜSTUNG

ÉQUIPEMENT DE LOCALISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(72) Inventor: **ALDECOA CRUZ, Xabier
48005 Bilbao (ES)**

(74) Representative: **Juncosa Miró, Jaime et al
Torner, Juncosa i Associats, S.L.
C/Pau Claris, 108, 1r 1a
08009 Barcelona (ES)**

(43) Date of publication of application:
**04.09.2019  Bulletin 2019/36**

(73) Proprietor: **MERYTRONIC 2012, S.L.
48340 Amorebieta (ES)**

(56) References cited:
**WO-A2-2012/155001      US-B1- 8 203 343
US-B1- 9 465 129**

## Description

### Field of the Art

The present invention relates to locator equipment for locating buried objects, for example cables or pipes, comprising a processing unit and a series of electromagnetic sensors coupled to a post of the locator equipment in different positions thereof.

### Background of the Invention

Patent US-B1-8203343 discloses a portable locator for detecting a buried object characterized by an electromagnetic (EM) field emission employing three-dimensional (3D) sensor arrays each having three substantially-identical EM field sensors disposed on a flexible annular wall having a radial centroid defining a sensing axis. The flexible annular sensors are retained in substantial concentricity with the corresponding sensing axes disposed in substantial mutual orthogonality. A pair of 3D sensor arrays disposed on a first axis substantially orthogonal to a second axis defied by another pair of EM field sensors each having a sensing axis disposed along the second axis. The locator introduces a user-reconfigurable user interface (UI) employing a "sticky" ratcheting audio UI and a hollow hinge assembly for redisposing the sensor assembly from an operating to a storage disposition.

Patent US-B1-9465129 discloses a locator equipment for locating buried objects such as conduits, pipes or cables, incorporating image-capturing and position and orientation measuring devices, such as magnetic compass, accelerometers, gyroscopes, GPS and DGPS. Likewise, the system may include other sensors, such as gas concentration sensors. The equipment associates images captured during the locate process with buried object position data. These data and images may be associated with images from satellites or aerial photography to provide a high-precision map. The locator equipment may further include at least one omnidirectional antenna array and helical antennas arranged on the sides for determining the magnetic field generated by the buried object.

International patent application WO 2012/155001 discloses buried object locators including various antenna configurations and safety features. In particular, the locator includes different sets of double gradient sensors with an omnidirectional sensor in between.

Patent US-B2-7834801 discloses a locator system for underground pipes or cables comprising one or more field sensors, wherein said sensors are electromagnetic sensors or radar sensors capable of penetrating the ground; one or more inertial positioning sensors such as accelerometers, gyroscopes, magneto resistive sensors or digital compasses; and a filter that fuses signals from different sensors to provide real-time position and field values of the underground cable relative to the locator system, wherein said values are a deviation with respect to a centerline and a depth of the underground cable. The mentioned filter determines a vector for each time period based on the signals or measurements captured by the different sensors, wherein said vector includes position, velocity, angular orientation and other parameters. The system further includes a mapping module that stores positions and field values for showing the electronic map of the position of the underground cable on a screen of the locator system.

Patent document US-B2-7990151 discloses a system for locating an underground utility line, comprising a manual device/structure; an upper antenna; a lower antenna spaced a known distance from the upper antenna; a null antenna arranged in an orthogonal manner with respect to the upper and lower antennas, the upper and lower antennas defining a locator plane; a inclinometer supported in the device for measuring the angle of inclination between the device and the locator plane; and a processor integrated in the device for determining the distance (depth) between the device and the underground cable using the difference in the signal level of the electromagnetic field obtained between the upper antenna and the lower antenna. Furthermore, it includes a screen to enable guiding the device to an optimum position over the underground cable by showing a vertical distance (depth) between a point close to the base of the device and a point of the underground cable intersecting the locator plane. It can additionally include a position antenna orthogonal to the other antennas which can detect the strength of a signal of the electromagnetic field and send it to the processor.

Patent US-B2-9599740 discloses user interfaces for enhancing location equipment. These locators can include a variety of sensors and other similar technologies for determining information relating to buried or inaccessible objects.

Patents or patent applications US-B2-7532127, US-B2-9696448 and US-A1-2015355364 also disclose locator equipment for locating buried objects that may include a series of electromagnetic sensors, a processor integrated for determining the distance (depth) between the equipment and the buried object, and a screen. Additionally, this locator equipment may also include positioning and/or motion detection devices such as accelerometers or GPS.

However, most known locator equipment do not allow acquiring information relating to a bend when tracing the cable, but only an amount of signal and a distance, depending on the skill of the operator, moving the equipment, so that it can identify bends or turns when tracing the cable.

In light of the foregoing, there is a need in the art for new portable locator equipment which allow combining different electromagnetic sensors in a quick and simple manner and which, in turn, provide a good precision in computations and have the smallest possible dimensions.

Brief Description of the Invention

To that end, embodiments of the present invention provide a locator equipment which, like the known devices in the field, comprises a post providing an axis of reference of the locator equipment; a processing unit with one or more processors, and preferably also a memory; and a plurality of electromagnetic sensors coupled to the post, wherein said plurality of electromagnetic sensors includes two gradient sensors.

The mentioned gradient sensors are located on the sides of the locator equipment and configured for measuring the distance of the locator equipment to a buried object (the subtraction of the reading provided by the gradient sensors provides the distance, which can be positive or negative, i.e., right or left). Both gradient sensors generate a voltage proportional to the magnitude of the magnetic field component coinciding with the axis of the gradient sensors, as it passes through each gradient sensor. In particular, when the gradient sensors are aligned with the buried object, the reading of the sensor is maximum. In contrast, when the gradient sensors are oriented in a direction perpendicular to the buried object, the read magnitude of the magnetic field component, and therefore the reading of the sensors, is ideally zero.

Unlike the known locator equipment, the plurality of electromagnetic sensors further include a null sensor comprising a winding wound around the axis of reference of the locator equipment; three non-omnidirectional (i.e., two-dimensional) sensors, referred as first sensor, second sensor and third sensor, comprising concentric windings with respect to a spheroidal support that is traversed by by the axis of reference of the locator equipment; and a fourth sensor located above the null sensor, preferably towards the center of the post. Like the gradient sensors, these additional sensors of the locator equipment also generate a voltage proportional to the magnitude of the magnetic field component coinciding with the axis thereof, as it passes through each sensor, the read magnitude of the magnetic field component being maximum when the sensors are aligned with the buried object and zero when they are perpendicular to the buried object.

According to the proposed locator equipment, the first and second concentric sensors are configured for measuring an angle of the locator equipment with respect to the buried object, whereas the third concentric sensor is configured for measuring the depth of the buried object together with the fourth sensor. The distance separating the third concentric sensor and the fourth sensor is comprised in a range of about 25 to 40 cm, preferably 30 cm. Likewise, the two sensors measuring the angle are offset +45º and -45º, respectively, on the spheroidal support. The winding of the third concentric sensor (the sensor measuring the depth together with the fourth sensor) is located on a plane containing the mentioned axis of reference of the locator equipment and is parallel to the windings of the mentioned two gradient sensors. This particular configuration allows saving space in the locator equipment and making it more lightweight, furthermore providing a section that is sufficient to prevent the need to place ferrites which distort the magnetic field and add more weight.

The processor/processors are configured for computing localization information of the mentioned buried object based on the measurements taken by the plurality of electromagnetic sensors. The mentioned computed localization information can be shown through a display unit included in the locator equipment itself such as a screen/display or located outside the locator equipment such as a tablet.

The display unit will preferably be integrated in the locator equipment itself. In this case, the display unit and the processing unit can form an assembly coupled, for example included in a shell, to one end of the post or to a point close to one end of the post. Alternatively, the display unit and the processing unit can be separate units and can be connected by a cable, for example.

In one embodiment, the proposed locator equipment further comprises a motion sensor operatively connected to the processing unit and configured for providing movement information of the locator equipment thereto. The motion sensor preferably comprises an accelerometer. More precise equipment that is capable of filtering noises, particularly when the noises are more noticeable, i.e., when the locator equipment is static or moving slightly, is achieved with the three concentric sensors (optionally also with the rest of the sensors of the locator equipment) and the motion sensor.

Likewise, the proposed locator equipment may further comprise one or more positioning sensors, for example a magnetometer and/or a GPS receiver, connected to the processing unit and configured for providing position information relating to the locator equipment thereto. If the locator equipment incorporates a magnetometer, said magnetometer may be located in one and the same chip as the accelerometer, or alternatively in a chip independent of the accelerometer.

The plurality of electromagnetic sensors is preferably made with an electro-conductive material wound like a ring on different supports made of plastic material. The supports of the gradient sensors, null sensor and fourth sensor are preferably equal. The electro-conductive material that is wound is preferably copper.

The fourth electromagnetic sensor comprises a winding wound around a ring-shaped support whose plane contains the axis of reference of the locator equipment.

In one embodiment, the proposed locator equipment integrates a communication unit, preferably a wireless communication unit, for transmitting the computed localization information, for example by means of Bluetooth technology, to a remote communication device (a smart mobile telephone, a tablet, a PC, a laptop, a communications server, etc.). The locator equipment also allows exporting data to files, preferably in the .KMZ or .KML format for GIS (Geographic Information System) systems. Likewise, the locator equipment can send information to external positioning systems, for example GPS, which can then in turn send the information to a computing device or a storage system.

Brief Description of the Drawings

The foregoing and other features and advantages will be more fully understood based on the following detailed description of several merely illustrative and non-limiting embodiments in reference to the attached drawings, in which:

Fig. 1 is a schematic view illustrating the different elements included in the proposed locator equipment according to an embodiment of the present invention.

Fig. 2 is an enlarged view of the electromagnetic sensors included in the proposed locator equipment.

Fig. 3 is a top view of the sensors of the spheroidal support and the two gradient sensors.

Detailed Description of several Embodiments

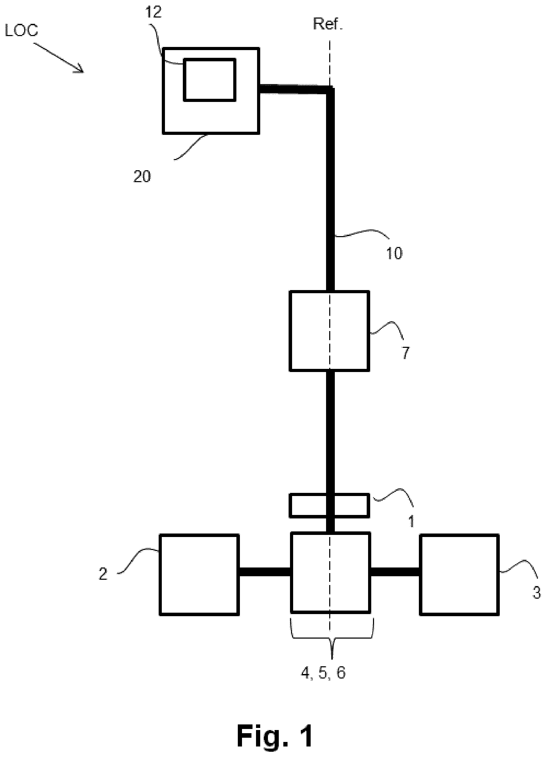

Figs. 1, 2 and 3 show a preferred embodiment of the proposed locator equipment LOC. As can be seen in Fig. 1, the portable locator equipment LOC for locating buried objects, for example cables, among others, which already has a grid frequency (50/60 Hz) or which has a desired frequency previously injected therein, includes a post 10 providing an axis of reference (Ref. in Fig. 1) of the locator equipment LOC, a display unit 12, such as a screen, and several electromagnetic sensors 2-7 coupled to the post in different positions thereof. The electromagnetic sensors 2-7 are manufactured with an electro-conductive material, for example copper, wound like a ring on different supports made of plastic material.

The locator equipment LOC also includes (not illustrated) a processing unit. According to the embodiment of Fig. 1, the display unit 12 and the processing unit are integrated in a shell 20 coupled to one end of the post 10. The processing unit computes localization information of the buried object based on the measurements taken by the electromagnetic sensors 2-7. The computed localization information can likewise be shown through the display unit 12. To that end, the display unit 12 integrates a user interface or UI. The information that can be shown through the user interface consists of: the amount of measured/computed signal, the position of the buried object on the plane of the ground with respect to the axis of reference of the locator equipment 1, the distance thereof and the bend thereof with respect to a coordinate axis (X, Y) centered in the mentioned axis of reference, etc. Likewise, the display unit 12 can show the passive frequency (50Hz) through the user interface, such that the user can know at all times if he/she is tracing an unenergized metal object or electric cable: pipes, poles, signs, fiber optic cables, etc.

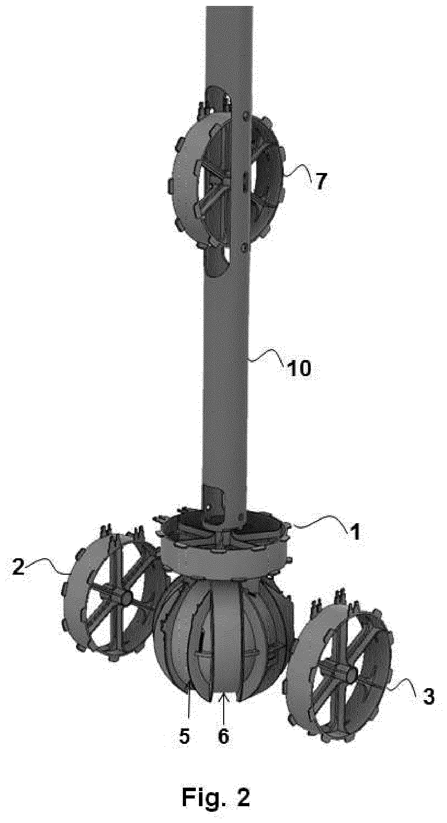

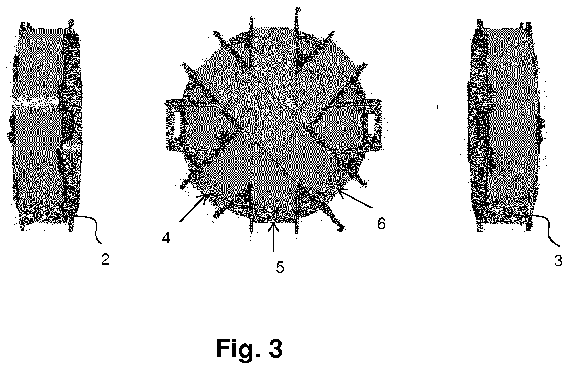

According to this preferred embodiment, the electromagnetic sensors include (see Figs. 2 and/or 3) two gradient sensors 2, 3 arranged on the sides of the post 10, three non-omnidirectional sensors 4, 5, 6, a null sensor 1 located right above the three sensors 4, 5, 6 and a sensor 7 positioned above the null sensor 1. The gradient sensors 2, 3 work (i.e., read the electromagnetic field generated by the current going through the buried object) according to axes parallel to a plane of the ground and perpendicular to the axis of reference of the locator equipment 1. The windings of the three sensors 4, 5, 6 are concentric with respect to a spheroidal support having the axis of reference of the locator equipment LOC going through same, for example, forming a ball. The sensors 4 and 6 are offset +45º and -45º, respectively, on the spheroidal support. On the other hand, the winding of sensor 5 is located on a plane containing the mentioned axis of reference of the locator equipment LOC and is parallel to the windings of the two gradient sensors 2, 3. In the preferred embodiment, the distance separating the axes of sensor 5 and sensor 7 is about 30 cm.

The locator equipment LOC can work according to different tracing modes depending on the user's purpose or requirements: Full mode, Peak mode, Null mode and Max mode. The locator equipment LOC allows changing from one mode to another, for example by means of a button or by means of the mentioned user interface. It must be pointed out that not all the modes are available for all the frequencies.

The Full mode is the most complete and automatic of all, and the buried object is depicted therein with a distance and an angle with respect to the coordinate axis; furthermore it is capable of preventing false peaks and noises, such that it does not depict the buried object in those situations in which the magnetic field is not clean.

The Peak mode is very similar to the Full mode but it entails less processing as it neither indicate the turn nor prevent false peaks or noise situations.

As its name indicates, in the Null mode the signal becomes zero when the locator equipment LOC is located right above the buried object. In this case, if the field is distorted the precision thereof is less efficient compared to the other operating modes.

Finally, the Max mode is very simple as it only shows a bar depending on the amount of signal obtained from the subtraction between sensor 5 and sensor 7. In this mode, sensor 7 is used as a gradient sensor.

By default, the user will perform tracing with the Full mode and change to the Max mode when marking the exact position of the buried object as it is the most precise. The Peak and Null modes do not appear unless the user activates them from the user interface menu.

In order to obtain the position (angle, depth and distance) between the locator equipment LOC and the buried object to be located/traced, the sensors 4 and 6 are configured for measuring the angle of the locator equipment 1 with respect to the buried object, for example, by means of the following formula:

$$\text{Angle} = \text{arc tangent (sensor 4 / sensor 6)} \quad (1).$$

The depth (height) of the buried object is measured with sensor 5 and sensor 7 by projecting the two coordinates by means of the electromagnetic field formula, for example, leading to the following result:

$$h = (\text{sensor 7} * \text{distance\_between\_sensors}) / (\text{sensor 5} - \text{sensor 7}) \quad (2).$$

Finally, the distance to the buried object is computed with the two gradient sensors 2, 3. Since the magnetic field is distorted and the readings of the two gradient sensors 2, 3 do not correspond with the actual distance in some cases, the sensors 4, 5, 6 and the null sensor 1 can also be used to rule out abnormal situations of the magnetic field, such as false peaks, and therefore no erroneous result will be shown through the mentioned display unit 12 in those cases.

In the Null mode, the null sensor 1 and sensor 7 are used for obtaining the distance. Furthermore, due to the orientation thereof, the magnitude of the null sensor 1 that becomes zero is depicted when the locator equipment 1 is above the buried object.

In one embodiment, the locator equipment LOC includes a motion sensor (not illustrated), for example an accelerometer, connected to the processing unit for providing movement information of the locator equipment thereto. Various enhancements can be made with the integration of an accelerometer which, like its name indicates, serves for measuring accelerations, and therefore changes in inertia. One of said enhancements is to filter the localization information when accelerations are not detected, i.e., when the equipment is not moving or moving just a little. Sometimes, due to the signal being very small or to noises, the signal oscillates even when the locator equipment LOC is not moving at all. This is due to the fact that the filtration integration time is too short for the purpose of obtaining a result quickly and that the effect achieved in the display unit 12 is attained when performing scanning or making sudden position changes.

An easy way to carry out said filtration is that, when the locator equipment LOC does not detect any acceleration, the integration time is increased. In other words, if 'x' samples were collected previously, "2x", 3x" samples or more will now be collected. Both the lateral displacement and the angle computed by the sensors 4 and 6 would be enhanced with the foregoing.

Likewise, the locator equipment LOC may include one or more positioning sensors (also not illustrated), such as a magnetometer and/or a GPS receiver, connected to the processing unit to provide position information relating to the locator equipment LOC. In this case, based on the information provided by sensors 4 and 6 in combination with the information provided by the magnetometer, the absolute angle of the buried object with respect to the magnetic north pole can be obtained, such that the coordinates and trace thereof can be placed on a map. The angle taken by sensors 4 and 6 is relative to the buried object. Therefore, by turning the tracer said relative angle to zero, the information provided by the magnetometer will directly indicate the absolute direction of the buried object with respect to the magnetic north pole. This would therefore allow locating not only a point of the buried object, but also the direction thereof on the map, so a better tracing precision is obtained.

In other embodiments, in this case not illustrated, the locator equipment does not integrate any display unit, rather said display unit is outside the equipment, i.e., independent thereto. In other words, the mentioned user interface in this case is integrated or implemented in a portable computing device, for example a tablet.

The locator equipment LOC in any of the embodiments can likewise integrate a communication unit for transmitting the computed localization information, for example by Bluetooth, to a remote communication device, for example a tablet, a PC, a communications server, etc.

The scope of the present invention is defined in the attached claims.

**Claims**

1. A locator equipment, comprising:

   - a post (10) providing an axis of reference of the locator equipment (LOC);
   - a processing unit with one or more processors; and
   - a plurality of electromagnetic sensors coupled to the post (10), wherein said plurality of electromagnetic sensors includes:

     • two gradient sensors (2, 3), that are spaced-apart on opposite sides of the post (10), generating a voltage proportional to the magnitude of a magnetic field component coinciding with an axis of the gradient sensors (2, 3), as it passes through each gradient sensor (2, 3), said two gradient sensors (2, 3) being configured to measure the distance of the locator equipment (LOC) to a buried object;

   wherein said one or more processors are configured to compute localization information of said buried object based on the measurements taken by the plurality of electromagnetic sensors, wherein said computed localization information is shown through a display unit, **characterized in that**:

   - the plurality of electromagnetic sensors further includes:

     - a null sensor (1) comprising a winding wound around said axis of reference of the locator equipment (LOC);
     - three sensors (4, 5, 6), namely a first sensor (4), a second sensor (6) and a third sensor (5), comprising concentric windings with respect to a spheroidal support, which is traversed by said axis of reference of the locator equipment (LOC), the first (4), second (6) and third (5) sensors being non-omnidirectional sensors; and
     - a fourth sensor (7) located above said null sensor (1),

       wherein said first (4) and second (6) sensors are configured to measure an angle of the locator equipment (LOC) with respect to the buried object and the third sensor (5) is configured to measure the depth of the buried object together with the fourth sensor (7), and
       wherein the first (4) and second (6) sensors are offset +45$\underline{o}$ and -45$\underline{o}$, respectively, on said spheroidal support and the winding of the third sensor (5) is located on a plane containing said axis of reference of the locator equipment (LOC) and is parallel to the windings of said two gradient sensors (2, 3).

2. The locator equipment according to claim 1, further comprising a motion sensor operatively connected to the processing unit and configured to provide movement information of the locator equipment (LOC) to said processing unit.

3. The locator equipment according to claim 2, wherein the motion sensor comprises an accelerometer.

4. The locator equipment according to any one of the preceding claims, further comprising one or more positioning sensors connected to the processing unit and configured to provide position information relating to the locator equipment (LOC) to said processing unit.

5. The locator equipment according to claim 4, wherein the positioning sensor/sensors comprise a magnetometer and/or a GPS receiver.

6. The locator equipment according to claim 1, wherein the electromagnetic sensors are made of an electro-conductive material wound like a ring on different supports made of plastic material.

7. The locator equipment according to claim 1, wherein said fourth sensor (7) comprises a winding wound around a ring-shaped support whose plane contains the axis of reference of the locator equipment (LOC).

8. The locator equipment according to claim 7, wherein the fourth sensor (7) is located at the center of the post (10).

9. The locator equipment according to claim 1, wherein the distance separating the third sensor (5) and the fourth sensor (7) is comprised in a range between 25 and 40 cm.

**10.** The locator equipment according to claim 6, wherein the electro-conductive material that is wound is copper.

**11.** The locator equipment according to claim 6, wherein the supports of the gradient sensors (2, 3), null sensor (1) and fourth sensor (7) are equal.

**12.** The locator equipment according to claim 1, wherein the locator equipment (LOC) further comprises a communication unit configured to transmit the computed information to a remote communication device.

**13.** The locator equipment according to claim 1, wherein said display unit (12) is included in the locator equipment (LOC).

**14.** The locator equipment according to claim 13, wherein the display unit (12) and the processing unit form an assembly coupled to one end of the post (10) or to a point close to one end of the post (10).


**Patentansprüche**

**1.** Lokalisierausrüstung, umfassend:

- einen Stab (10) als Bezugsachse für die Lokalisierausrüstung (LOC);
- eine Prozessoreinheit mit einem oder mehreren Prozessoren und
- eine Vielzahl von mit dem Stab (10) verbundenen elektromagnetischen Sensoren, wobei die genannte Vielzahl von elektromagnetischen Sensoren Folgendes umfasst:

• zwei Neigungssensoren (2, 3), die räumlich voneinander getrennt auf gegenüberliegenden Seiten des Stabs (10) angeordnet sind und eine Spannung erzeugen, die proportional zur Stärke einer Magnetfeldkomponente ist, welche beim Durchgang der Spannung durch einen der beiden Neigungssensoren (2, 3) mit der Achse des jeweiligen Neigungssensors (2, 3) zusammenfällt, wobei die beiden genannten Neigungssensoren (2, 3) zur Messung des Abstands der Lokalisierausrüstung (LOC) zu einem vergrabenen Objekt ausgelegt sind;

wobei der genannte eine bzw. die mehreren Prozessoren zum Berechnen der Lokalisierungsinformationen des genannten vergrabenen Objekts auf der Grundlage der von der Vielzahl der elektromagnetischen Sensoren vorgenommenen Messungen ausgelegt sind, wobei die genannten berechneten Lokalisierungsinformationen auf einer Displayeinheit angezeigt werden,
**dadurch gekennzeichnet, dass**:

- die Vielzahl von elektromagnetischen Sensoren ferner Folgendes umfasst:

- einen Nullsensor (1) mit einer um die genannte Bezugsachse der Lokalisierausrüstung (LOC) gewickelten Wicklung;
- drei Sensoren (4, 5, 6), und zwar einen ersten Sensor (4), einen zweiten Sensor (6) und einen dritten Sensor (5) mit konzentrischen Wicklungen relativ zu einem kugelförmigen Haltekörper, durch den die genannte Bezugsachse der Lokalisierausrüstung (LOC) verläuft, wobei der erste (4), der zweite (6) und der dritte (5) Sensor nicht-omnidirektionale Sensoren sind; und
- einen über dem genannten Nullsensor (1) angeordneten vierten Sensor (7),

wobei der genannte erste (4) und zweite (6) Sensor zur Messung eines Winkels der Lokalisierausrüstung (LOC) zu dem vergrabenen Objekt ausgelegt sind und der dritte Sensor (5) zur Messung der Tiefe des vergrabenen Objekts zusammen mit dem vierten Sensor (7) ausgelegt ist, und
wobei der erste (4) und der zweite (6) Sensor auf dem genannten kugelförmigen Haltekörper um +45° bzw. -45° versetzt sind und die Wicklung des dritten Sensors (5) in einer Ebene liegt, die die genannte Bezugsachse der Lokalisierausrüstung (LOC) enthält und parallel zu den Wicklungen der beiden genannten Neigungssensoren (2, 3) verläuft.

**2.** Lokatorisierungsausrüstung nach Anspruch 1, umfassend ferner einen mit der Prozessoreinheit operativ verbundenen Bewegungssensor, der zur Bereitstellung von Bewegungsinformationen der Lokalisierausrüstung (LOC) an die genannte Prozessoreinheit ausgelegt ist.

3.  Lokalisierausrüstung nach Anspruch 2, wobei der Bewegungssensor einen Beschleunigungsmesser umfasst.

4.  Lokalisierausrüstung nach einem der vorstehenden Ansprüche, umfassend ferner einen oder mehrere mit der Prozessoreinheit verbundene Positionierungssensoren, die zur Bereitstellung von Informationen über die Position der Lokalisierausrüstung (LOC) an die genannte Prozessoreinheit ausgelegt sind.

5.  Lokalisierausrüstung nach Anspruch 4, wobei der/die Positionssensor/en ein Magnetometer und/oder einen GPS-Empfänger umfassen.

6.  Lokalisierausrüstung nach Anspruch 1, wobei die elektromagnetischen Sensoren aus einem elektrisch leitenden Material bestehen, das ringartig auf verschiedene Kunststofthaltekörper gewickelt ist.

7.  Lokalisierausrüstung nach Anspruch 1, wobei der genannte vierte Sensor (7) eine Wicklung um einen ringförmigen Haltekörper umfasst, dessen Ebene die Bezugsachse der Lokalisierausrüstung (LOC) enthält.

8.  Lokalisierausrüstung nach Anspruch 7, wobei der vierte Sensor (7) in der Mitte des Stabs (10) angeordnet ist).

9.  Lokalisierausrüstung nach Anspruch 1, wobei der Abstand zwischen dem dritten Sensor (5) und dem vierten Sensor (7) in einem Bereich zwischen 25 und 40 cm liegt.

10.  Lokalisierausrüstung nach Anspruch 6, wobei das elektrisch leitende Material der Wicklungen Kupfer ist.

11.  Lokalisierausrüstung nach Anspruch 6, wobei die Haltekörper der Neigungssensoren (2, 3), des Nullsensors (1) und des vierten Sensors (7) gleich sind.

12.  Lokalisierausrüstung nach Anspruch 1, wobei die Lokalisierausrüstung (LOC) ferner eine Kommunikationseinheit umfasst, die zur Übertragung der berechneten Informationen an ein Remote-Kommunikationsgerät ausgelegt ist.

13.  Lokalisierausrüstung nach Anspruch 1, wobei die genannte Displayeinheit (12) in der Lokalisierausrüstung (LOC) enthalten ist.

14.  Lokalisierausrüstung nach Anspruch 13, wobei die Displayeinheit (12) und die Prozessoreinheit eine mit einem Ende des Stabs (10) oder mit einem Punkt in der Nähe eines Endes des Stabs (10) verbundene Baugruppe bilden.

**Revendications**

1.  Un équipement de localisation comportant :

    - un mât (10) offrant un axe de référence de l'équipement de localisation (LOC) ;
    - une unité de traitement ayant un ou plusieurs processeurs ; et
    - une pluralité de capteurs électromagnétique couplés au mât (10), où cette pluralité de capteurs électromagnétiques comprent :

        • deux capteurs de gradient (2,3), qui sont séparés entre eux sur des côtés opposés du mât (10), en générant une tension proportionnelle à l'intensité du composant de champ magnétique coïncidant avec un axe des capteurs de gradient (2,3), lorsqu'il passe à travers chaque capteur de gradient (2,3), ces deux capteurs de gradient (2,3) étant configurés pour mesurer la distance de l'équipement de localisation (LOC) jusqu'à un objet enterré ;

    où cet un ou ces plusieurs processeurs sont configurés pour traiter les informations de localisation de cet objet enterré sur la base des mesures prises par la pluralité des capteurs électromagnétiques, où ces informations de localisation traitées sont affichées à travers une unité d'affichage,
    **caractérisé en ce que** :

        - la pluralité de capteurs électromagnétiques comprend en outre :

        - un capteur nul (1) comportant un enroulement enroulé autour de cet axe de référence de l'équipement de localisation (LOC) ;
- trois capteurs (4,5,6), notamment un premier capteur (4), un deuxième capteur (6) et un troisième capteur (5), comportant des enroulements concentriques par rapport à un support sphéroïdal, qui est traversé par cet axe de référence de l'équipement de localisation (LOC), les premier (4), deuxième (6) et troisième (5) capteurs étant des capteurs non-omnidirectionnels ; et

un quatrième capteur (7) situé au-dessus de ce capteur nul (1),
où ces premier (4) et deuxième (6) capteurs sont configurés pour mesurer un angle de l'équipement de localisation (LOC) par rapport à l'objet enterré et le troisième capteur est configuré pour mesurer la profondeur de l'objet enterré ensemble avec la quatrième capteur (7), et
où les premier (4) et deuxième (6) capteurs sont décalés +45º et -45º, respectivement, sur ce support sphéroïdal et l'enroulement du troisième capteur (5) est situé sur un plan contenant cet axe de référence de l'équipement de localisation (LOC) et est parallèle aux enroulements de ces deux capteurs de gradient (2,3).

2. L'équipement de localisation conformément à la revendication 1, comportant un capteur de mouvement fonctionnellement connecté à l'unité de traitement et configuré pour fournir des informations de mouvement de l'équipement de localisation (LOC) à cette unité de traitement.

3. L'équipement de localisation conformément à la revendication 2, où le capteur de mouvement comporte un accéléromètre.

4. L'équipement de localisation conformément à une quelconque des revendications précédentes, comportant en outre un ou plusieurs capteurs de positionnement connectés à l'unité de traitement et configurés pour fournir les informations de positon concernant l'équipement de localisation (LOC) à cette unité de traitement.

5. L'équipement de localisation conformément à la revendication 4, où le capteur/les capteurs comporte/nt un magnétomètre et/ou un récepteur de GPS.

6. L'équipement de localisation conformément à la revendication 1, où les capteurs électromagnétiques sont faits en un matériau conducteur d'électricité enroulé comme une bague sur différents supports fait en matière plastique.

7. L'équipement de localisation conformément à la revendication 1, où ce quatrième capteur (7) comporte un enroulement enroulé autour d'un support ayant la forme d'une bague dont le plan contient l'axe de référence de l'équipement de localisation (LOC).

8. L'équipement de localisation conformément à la revendication 7, où le quatrième capteur (7) est situé au centre du mât (10).

9. L'équipement de localisation conformément à la revendication 1, où la distance séparant le troisième capteur (5) et le quatrième capteur (7) est comprise dans une plage d'entre 25 et 40 cm.

10. L'équipement de localisation conformément à la revendication 6, où le matériau conducteur d'électricité qui est enroulé est du cuivre.

11. L'équipement de localisation conformément à la revendication 6, où les supports des capteurs de gradient (2,3), capteur nul (1) et quatrième capteur (7) sont égaux.

12. L'équipement de localisation conformément à la revendication 1, où l'équipement de localisation (LOC) comporte en outre une unité de communication configurée pour transmettre les informations traitées à un dispositif de communication à distance.

13. L'équipement de localisation conformément à la revendication 1, où cette unité d'affichage (12) est comprise dans l'équipement de localisation (LOC).

14. L'équipement de localisation conformément à la revendication 13, où l'unité d'affichage (12) et l'unité de traitement forment un ensemble couplé à une extrémité du mât (10) ou à un point proche de l'extrémité du mât (10).

**Fig. 1**

**Fig. 2**

**Fig. 3**

**EP 3 534 185 B1**

**REFERENCES CITED IN THE DESCRIPTION**

**Patent documents cited in the description**

- US 8203343 B1
- US 9465129 B1
- WO 2012155001 A
- US 7834801 B2
- US 7990151 B2
- US 9599740 B2
- US 7532127 B2
- US 9696448 B2
- US 2015355364 A1